# EUROPÄISCHE PATENTSCHRIFT

(11) **EP 4 411 190 B1**
(45) Veröffentlichungstag und Bekanntmachung des Hinweises auf die Patenterteilung: **10.12.2025**
(21) Anmeldenummer: 24154563.1
(22) Anmeldetag: 30.01.2024
(51) Int. Cl.: F16L 25/00, F16L 37/091

(54) **VERBINDUNGSANORDNUNG ZUR VERBINDUNG MIT EINEM ENDE EINES WELLROHRS**
CONNECTION ASSEMBLY FOR CONNECTION TO AN END OF A CORRUGATED PIPE
ENSEMBLE DE RACCORDEMENT DESTINÉ À ÊTRE RELIÉ À UNE EXTRÉMITÉ D'UN TUYAU ONDULÉ

(30) Priorität: 02.02.2023 DE 102023102600
(43) Veröffentlichungstag der Anmeldung: 07.08.2024
(73) Patentinhaber: Fränkische Industrial Pipes GmbH & Co. KG, 97486 Königsberg (DE)
(72) Erfinder: Willinger, Rainer, 97519 Riedbach (DE)
(74) Vertreter: Weickmann & Weickmann PartmbB

(56) Entgegenhaltungen:
- EP-A1- 2 975 311
- DE-A1- 102014 219 076
- US-A- 5 813 705
- US-B1- 6 254 145

## Beschreibung

Die Erfindung betrifft eine Verbindungsanordnung, die zur Verbindung mit einem Ende eines Wellrohrs ausgebildet und bestimmt ist.

Beispielhafte bekannte Verbindungsanordnungen zur Verbindung mit einem Wellrohr umfassen beispielsweise Rastelementträger, welche Rastelemente aufweisen, um mit dem Wellrohr in Eingriff zu treten. Diese Rastelementträger können wiederum über spezielle Rast- und Abstützmechanismen gegenüber dem Grundkörper gesichert sein. Derartige Rast- und Abstützmechanismen steigern einerseits die Herstellkosten einer jeweiligen Verbindungsanordnung und sind andererseits anfällig für Fehlbedienungen oder Beschädigungen.

Aus der US 5 813 705 A ist eine Verbindungsanordnung bekannt, welche einen Grundkörper und eine Rasteinheit umfasst, welche durch eine Umfangsöffnung einführbar ist und mit einer Mehrzahl von mit einem Rastelementträger einstückig ausgebildeten Rastelementen bereitgestellt ist, um ein Wellrohr in dem Grundkörper aufzunehmen und darin zu befestigen. Ferner sei auf die Dokumente DE 10 2014 219076 A1, US 6 254 145 B1 und EP 2 975 311 A1 verwiesen.

Es ist daher die Aufgabe der vorliegenden Erfindung, eine Verbindungsanordnung bereitzustellen, welche zuverlässigere Bedienung gewährleistet.

Diese Aufgabe wird gemäß der vorliegenden Erfindung durch eine Verbindungsanordnung nach Anspruch 1 gelöst.

Somit kann der Rastelementträger frei von einer Mehrzahl von Anlageelementen sein, welche mit dem Grundkörper in Kraftübertragungseingriff bringbar sind. Die Kontaktfläche des Rastelementträgers kann beispielsweise im Wesentlichen ringförmig ausgebildet sein, sodass die Kontaktfläche des Rastelementträgers über den gesamten Bereich der Gegenkontaktfläche des Grundkörpers im Wesentlichen vollflächig an der Gegenkontaktfläche anliegen kann. Ferner muss die Kontaktfläche des Rastelementträgers nicht in Länge und Breite ausgebildet sein, sondern die Kontaktfläche kann beispielsweise durch eine Kante des Rastelementträgers ausgebildet sein.

Dabei kann das Basiselement C-förmig ausgeführt sein. So kann beispielsweise das Basiselement halbkreisbogenförmig sein, während der Rastelementträger, mit Ausnahme des Schlitzes, vollkreisbogenförmig ausgebildet sein kann.

Ein jeweiliges Rastelement kann insbesondere einen federnden Arm umfassen, welcher an seinem einen Längsende mit dem Rastelementträger verbunden ist und an seinem anderen Längsende einen Klinkenvorsprung aufweist, welcher dazu eingerichtet ist, mit dem Wellental einzugreifen. Dabei kann sich der federnde Arm beispielsweise in einer Richtung erstrecken, welche im Wesentlichen der Einführrichtung des Wellrohrs in die Aufnahmevertiefung entspricht. Der Klinkenvorsprung kann sich von dem federnden Arm weg in einer im Wesentlichen radialen Richtung erstrecken, bezogen auf eine Achse, welche durch die Einführrichtung des Wellrohrs in die Aufnahmevertiefung gebildet ist. Der federnde Arm kann sich von seinem mit dem Rastelementträger verbundenen Längsende zu dem mit dem Klinkenvorsprung verbundenen Längsende hin verjüngen, insbesondere in seiner Abmessung, betrachtet in einer im Wesentlichen radialen Richtung, das heißt derjenigen Richtung, in welcher der federnde Arm ausgelenkt werden kann, wenn das Wellrohr in die Aufnahmevertiefung eingeführt wird. Ferner kann die erfindungsgemäße Verbindungsanordnung frei von Dichtelementen, wie zum Beispiel O-Ringen, ausgebildet sein.

Erfindungsgemäß ist die Rasteinheit mit dem Grundkörper einstückig verbunden. Die Verbindung der Rasteinheit mit dem Grundkörper kann insbesondere ein Filmscharnier bilden. Auf diese Weise kann die Rasteinheit verliersicher zusammen mit dem Grundkörper bereitgestellt sein. Ein Benutzer der erfindungsgemäßen Verbindungsanordnung hat somit nicht mehr dafür Sorge zu tragen, dass ihm zum Zeitpunkt der Montage sämtliche einzelnen zur Herstellung der entsprechenden Verbindung notwendigen Bauteile vorliegen, sondern die erfindungsgemäße Verbindungsanordnung kann durch ihre einstückige Ausbildung eine Bedienerfreundlichkeit für einen Benutzer entsprechend verbessern. Insbesondere kann diese einstückige Einheit aus Rasteinheit und Grundkörper unter Verwendung eines Spritzgussverfahrens hergestellt sein.

Die Verbindungsanordnung kann beispielsweise Kunststoff, insbesondere Polyamid, vorzugsweise PA6, und/oder Polypropylen, umfassen.

Aufgrund der einstückigen Ausbildung der Rasteinheit und des Grundkörpers kann vermittels der Verbindung die Rasteinheit durch die Umfangsöffnung des Grundkörpers in die Aufnahmevertiefung einschwenkbar sein. Zu diesem Zweck kann die Rasteinheit relativ zu dem Grundkörper, im Ausgangszustand der Verbindungsanordnung, derart angeordnet sein, dass eine Schwenkbewegung der Rasteinheit relativ zu dem Grundkörper in die vollständig montierte Relativstellung einen Winkel von etwa 180° beschreibt.

Ferner befindet sich der Schlitz des Rastelementträgers in unmittelbarer Nähe zu der Verbindung der Rasteinheit mit dem Grundkörper. Diese Anordnung des Schlitzes des Rastelementträgers kann insbesondere dann vorteilhaft sein, wenn die Rasteinheit aus dem Grundkörper entfernt werden soll, insbesondere aus der Aufnahmevertiefung des Grundkörpers heraus verschwenkt werden soll, während sich das Wellrohr noch im Grundkörper befindet. Wird hierfür zum Beispiel die Rasteinheit an der Basiseinheit angehoben, um den Rastelementträger aus dem Grundkörper zu entfernen, so kann sich der Schlitz des Rastelementträgers mehr und mehr aufweiten und derjenige Teil des Rastelementträgers, welcher von der Verbindung der Rasteinheit mit dem Grundkörper entfernt angeordnet ist, kann um das Wellrohr herumgezogen werden, bis der Rastelementträger vollständig aus der Aufnahmevertiefung des Grundkörpers entfernt worden ist. Dabei können die freien Enden der Rastelemente entlang eines Wellentals, mit welchem sie im geschlossenen Zustand der Rasteinheit eingegriffen haben, in Umfangsrichtung des Wellrohrs gleiten. Als "unmittelbare Nähe" soll hier eine Anordnung des Schlitzes in einem Bereich verstanden werden, welcher sich, beginnend von der Verbindung der Rasteinheit mit dem Grundkörper und entlang der Rasteinheit, vorteilhafterweise entlang des Basiselements, verlaufend, über höchstens 10%, insbesondere über höchstens 5%, der Gesamterstreckung der Rasteinheit, vorteilhafterweise der Gesamterstreckung des Basiselements, erstreckt.

In einer Weiterbildung der vorliegenden Erfindung kann die Rasteinheit, insbesondere das Basiselement, eine Rasteinrichtung umfassen, welche dazu eingerichtet ist, mit einer entsprechenden Gegenrasteinrichtung des Grundkörpers in einen zerstörungsfrei lösbaren Rasteingriff zu treten. Auf diese Weise kann die Rasteinheit im montierten Zustand mit dem Grundkörper an diesem gesichert werden, sodass ein ungewünschtes Außereingrifftreten der Rasteinheit von dem Grundkörper verhindert werden kann. Die Kombination aus Rasteinrichtung der Rasteinheit und Gegenrasteinrichtung des Grundkörpers kann beispielsweise eine Kante beziehungsweise einen hakenartigen Vorsprung an dem einen und eine Kante beziehungsweise einen Hinterschnitt an dem anderen umfassen.

Hierfür kann die Rasteinrichtung der Rasteinheit an einem freien Ende des Basiselements angeordnet sein, welches der Verbindung der Rasteinheit mit dem Grundkörper, insbesondere diametral, entgegengesetzt ist. Somit kann die Rasteinheit aus der anfänglichen Relativstellung zwischen Rasteinheit und Grundkörper so weit in die Aufnahmevertiefung des Grundkörpers hineinverschwenkt werden, bis die Rasteinrichtung der Rasteinheit mit der Gegenrasteinrichtung des Grundkörpers in Eingriff tritt. Im eingerasteten Zustand der Rasteinrichtung der Rasteinheit mit der Gegenrasteinrichtung des Grundkörpers ist der geschlossene (montierte) Zustand der Rasteinheit relativ zu dem Grundkörper definiert.

Vorteilhafterweise kann die Gegenrasteinrichtung des Grundkörpers an einer Außenseite des Grundkörpers angeordnet sein. Auf diese Weise ist die Rasteinrichtung der Rasteinheit beziehungsweise die Gegenrasteinrichtung des Grundkörpers von einer Außenseite der Verbindungsanordnung her gut zugänglich, sodass die Rasteinrichtung der Rasteinheit in einer einfachen Weise von der Gegenrasteinrichtung des Grundkörpers gelöst werden kann, um die Rasteinheit aus dem Grundkörper entfernen zu können.

Der Rasteinrichtung der Rasteinheit kann ein Vorsprung zugeordnet sein, welcher dazu eingerichtet ist, im geschlossenen Zustand der Rasteinrichtung einen Abschnitt der Gegenrasteinrichtung des Grundkörpers zu überlagern, und welcher insbesondere radial innerhalb der Rasteinrichtung der Rasteinheit angeordnet ist und somit den Abschnitt der Gegenrasteinrichtung des Grundkörpers an einer radial inneren Seite überlagert. So kann ein unbeabsichtigtes Lösen der Rasteinrichtung der Rasteinheit von der Gegenrasteinrichtung des Grundkörpers, zum Beispiel aufgrund von Druck auf das Basiselement nach radial innen, verhindert werden. Das heißt, ein Lösen der Rasteinrichtung der Rasteinheit von der Gegenrasteinrichtung des Grundkörpers kann insbesondere nur dadurch erreicht werden, dass ein Abschnitt der Rasteinheit, welcher sich zwischen der Rasteinrichtung der Rasteinheit und einer Stelle erstreckt, an welcher sich der voranstehend erwähnte Vorsprung der Rasteinheit, insbesondere dem Basiselement, abzweigt, elastisch nach radial außen verlagert wird. In umgekehrter Weise kann ein Außereingrifftreten der Rasteinrichtung der Rasteinheit von der Gegenrasteinrichtung des Grundkörpers nicht erreicht werden, wenn ein Abschnitt der Rasteinheit elastisch nach radial außen verlagert wird, welcher sich zwischen der Verbindung der Rasteinheit mit dem Grundkörper und der Stelle erstreckt, an welcher der Vorsprung der Rasteinheit angeordnet ist, da hierbei der Vorsprung an einer radial inneren Seite der Gegenrasteinrichtung des Grundkörpers anliegt und somit ein Außereingrifftreten von Rasteinrichtung und Gegenrasteinrichtung verhindert.

Insbesondere kann die Kontaktfläche des Rastelementträgers im Wesentlichen bündig in die wenigstens eine entgegen der Einführrichtung gerichtete Anlagefläche des Basiselements übergehen. Hierbei kann es vorteilhaft sein, dass sich die Kontaktfläche des Rastelementträgers und die Anlagefläche des Basiselements in einer gemeinsamen Ebene erstrecken.

In einer Weiterbildung der erfindungsgemäßen Verbindungsanordnung kann die Gegenkontaktfläche des Grundkörpers als eine Seitenwand einer Nut ausgebildet sein, welche sich entlang der Innenwandung der Aufnahmevertiefung des Grundkörpers in Umfangsrichtung der Aufnahmevertiefung des Grundkörpers erstreckt. Diese Ausgestaltung erlaubt eine besonders einfache Ausbildung der Auszugssicherung der Rasteinheit aus dem Grundkörper entgegen der Einführrichtung des Wellrohrs in den Grundkörper. So kann die Rasteinheit in die Aufnahmevertiefung des Grundkörpers derart eingebracht werden, dass im montierten Zustand der Rasteinheit an dem Grundkörper ein entsprechender, beispielsweise der Basiseinheit der Rasteinheit diametral entgegengesetzter, Abschnitt des Rastelementträgers in die Nut des Grundkörpers eintaucht. Wird nun eine Zugkraft auf das Wellrohr ausgeübt, welche entgegen der Einführrichtung des Wellrohrs in den Grundkörper wirkt, so kann die Kontaktfläche der Rasteinheit beziehungsweise des Rastelementträgers, welche in die Nut des Grundkörpers eingetaucht ist, an der Seitenwand der Nut zum Anliegen kommen, sodass eine weitere Verlagerung der Rasteinheit beziehungsweise des Rastelementträgers entgegen der Einführrichtung des Wellrohrs in den Grundkörper verhindert wird.

Die Nut, welche einerseits, entlang der Einführrichtung des Wellrohrs in die Aufnahmevertiefung betrachtet, durch die Seitenwand definiert ist, gegen welche die Gegenkontaktfläche des Grundkörpers zum Anliegen kommen kann, kann andererseits, in dieser Richtung betrachtet, durch eine weitere Seitenwand definiert sein, welche sich insbesondere in einer radialen Richtung in Bezug auf eine Mittelachse des zentralen Durchgangs und/oder der Aufnahmevertiefung erstreckt. Dabei kann die radiale Erstreckung der weiteren Seitenwand, von Nutboden bis zu dem dem Nutboden entgegengesetzten Ende der weiteren Seitenwand, wenigstens einer Höhe entsprechen, welche von dem freien Ende des Klinkenvorsprungs in der radialen Richtung bis zu der radial äußeren Seite des federnden Arms genommen ist, an welchem der Klinkenvorsprung angebracht ist. Dadurch kann gewährleistet sein, dass der Klinkenvorsprung beim Einführen des Wellrohrs in die Aufnahmevertiefung hineinverlagert wird und so vollständig außer Eingriff von dem Wellrohr treten kann.

Um eine Relativbewegung der einstückig an dem Grundkörper ausgebildeten Rasteinheit relativ zu dem Grundkörper zu verbessern, kann in unmittelbarer Nähe zu der Verbindung der Rasteinheit mit dem Grundkörper an der Außenseite der Rasteinheit und an der Außenseite des Grundkörpers jeweils eine Fläche angeordnet sein, wobei die beiden Flächen zueinander weisen und sich im Wesentlichen parallel zueinander erstrecken oder einen vorbestimmten Winkel zueinander aufweisen, welcher insbesondere bei Spitzgussbauteilen typisch ist. Dies kann dafür sorgen, dass die Verbindung zwischen Rasteinheit und Grundkörper klar definiert ist und insbesondere, dass ein Steg, welcher die Rasteinheit mit dem Grundkörper einstückig verbindet, eine im Wesentlichen gleichbleibende Stärke aufweist.

Ferner können die voranstehend erwähnten Flächen ermöglichen, dass im Spritzgussverfahren Kerne einer ausreichenden Größe und damit einer ausreichenden Stabilität verwendet werden können und dass diese Kerne in einer einfachen Weise aus dem Spritzgussteil nach dessen Herstellung entfernt werden können.

Die vorliegende Erfindung wird im Folgenden anhand eines Ausführungsbeispiels mit Bezug auf die begleitenden Zeichnungen in größerem Detail beschrieben werden. Es stellt dar:
- Figur 1: eine perspektivische Ansicht einer erfindungsgemäßen Verbindungsanordnung;
- Figur 2: eine Seitenquerschnittsansicht der erfindungsgemäßen Verbindungsanordnung aus Figur 1 im verbundenen Zustand mit einem Wellrohr; und
- Figur 3: eine Schnittansicht der erfindungsgemäßen Verbindungsanordnung in einem anfänglichen Zustand, wie in Figur 1 gezeigt.

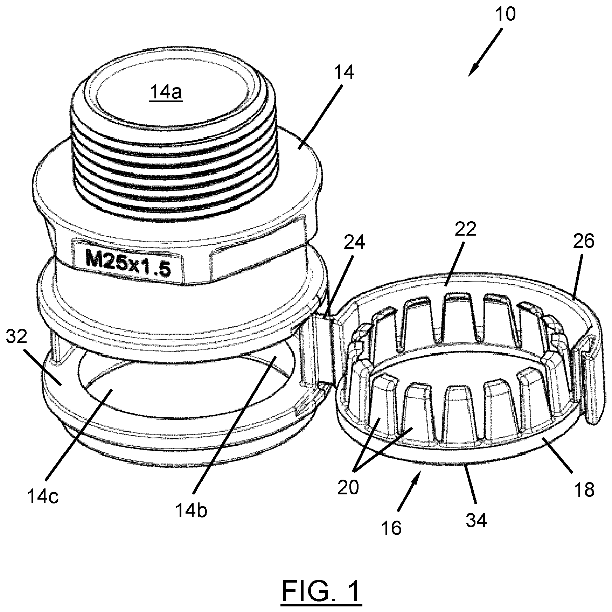

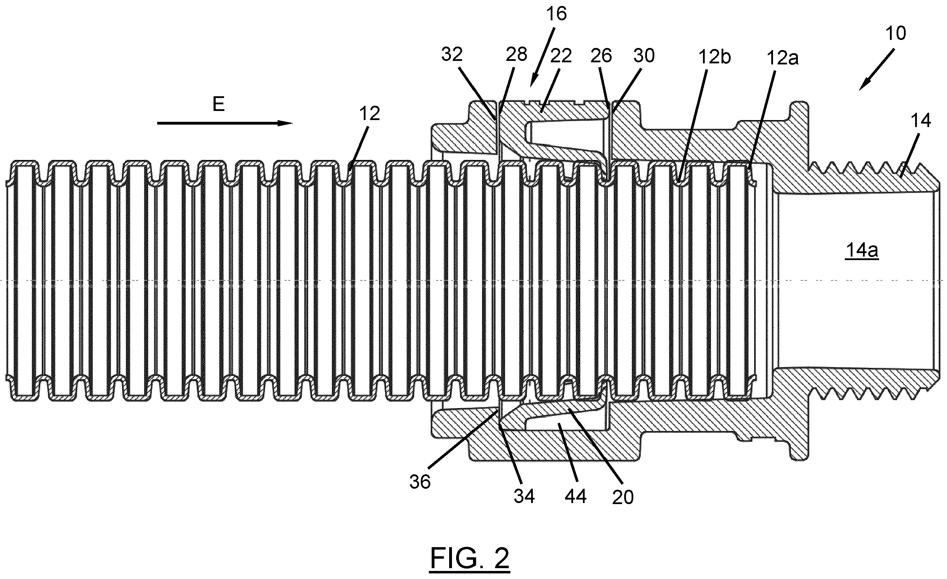

In Figur 1 ist eine erfindungsgemäße Verbindungsanordnung allgemein mit dem Bezugszeichen 10 bezeichnet. Die Verbindungsanordnung 10 ist zur Verbindung mit einem Ende 12a eines Wellrohrs 12 (siehe Figur 2) ausgebildet und bestimmt.

Die Verbindungsanordnung 10 umfasst einen Grundkörper 14 mit einem zentralen Durchgang 14a, der in eine an einem Ende des Grundkörpers 14 vorgesehene Aufnahmevertiefung 14b mündet. Die Aufnahmevertiefung 14b ist dazu eingerichtet, das Wellrohr 12 aufzunehmen, welches entlang einer Einführrichtung E (siehe Figur 2) in die Aufnahmevertiefung 14b eingeführt worden ist.

Der Grundkörper 14 umfasst ferner eine Umfangsöffnung 14c, durch welche eine Rasteinheit 16 der Verbindungsanordnung 10 in die Aufnahmevertiefung 14b einbringbar ist. Die Rasteinheit 16 umfasst wiederum einen Rastelementträger 18, von welchem sich in der Einführrichtung E eine Mehrzahl von Rastelementen 20 in einer mit dem Rastelementträger 18 einstückig ausgebildeten Weise erstrecken.

Wie dies in Figur 2 zu erkennen ist, sind die Rastelemente 20 dazu eingerichtet, in ein Wellental 12b des Wellrohrs 12 einzugreifen und somit eine Bewegung des Wellrohrs 12 entgegen der Einführrichtung E aus dem Grundkörper 14 heraus entgegenzuwirken. In der hier gezeigten Ausführungsform greift ein an einem federnden Arm angeordneter Klinkenvorsprung in das Wellental 12b des Wellrohrs 12 ein.

Die Rasteinheit 16 umfasst hier ein Basiselement 22, mit welchem der Rastelementträger 18 einstückig verbunden ist. Das Basiselement 22 erstreckt sich hier im Wesentlichen halbkreisbogenförmig, wobei das Basiselement 22 an einem Ende über ein Filmscharnier 24 einstückig mit dem Grundkörper 14 ausgebildet ist. Über das Filmscharnier 24 (auch als "Steg" bezeichnet) kann die Rasteinheit 16 in die Aufnahmevertiefung 14b des Grundkörpers 14 eingeschwenkt werden. Dieser geschlossene Zustand ist in Figur 2 dargestellt. In Figur 2 ist auch zu erkennen, dass in dem montierten Zustand der Rasteinheit 16 an dem Grundkörper 14 eine in Einführrichtung E gerichtete Anlagefläche 26 des Basiselements 22 gegen eine entsprechende Gegenanlagefläche 30 des Grundkörpers 14 gerichtet ist beziehungsweise an dieser anliegen kann und eine entgegen der Einführrichtung E gerichtete Anlagefläche 28 des Basiselements 22 gegen eine Gegenanlagefläche 32 des Grundkörpers 14 gerichtet ist beziehungsweise an dieser anliegen kann.

Ein dem Basiselement 22 diametral gegenüberliegender Abschnitt des Rastelementträgers 18 bildet an seiner den Rastelementen 20 entgegengesetzten Seite eine Kontaktfläche 34 aus, welche dazu eingerichtet ist, eine Relativbewegung des Rastelementträgers 18 entgegen der Einführrichtung E zu begrenzen. Zu diesem Zweck kann die Kontaktfläche 34 des Rastelementträgers 18 im geschlossenen Zustand der Rasteinheit 16 gegen eine Seitenwand 36, im Sinne einer Gegenkontaktfläche, anliegen. Die Gegenkontaktfläche 36 ist in der in Figur 2 dargestellten Ausführungsform der erfindungsgemäßen Verbindungsanordnung 10 eine Seitenwand 36 einer Nut 44, welche an einer Innenwandung des zentralen Durchgangs 14a des Grundkörpers 14 im Bereich der Aufnahmevertiefung 14b, insbesondere der Umfangsöffnung 14c in Bezug auf den zentralen Durchgang 14a diametral entgegengesetzt, ausgebildet ist.

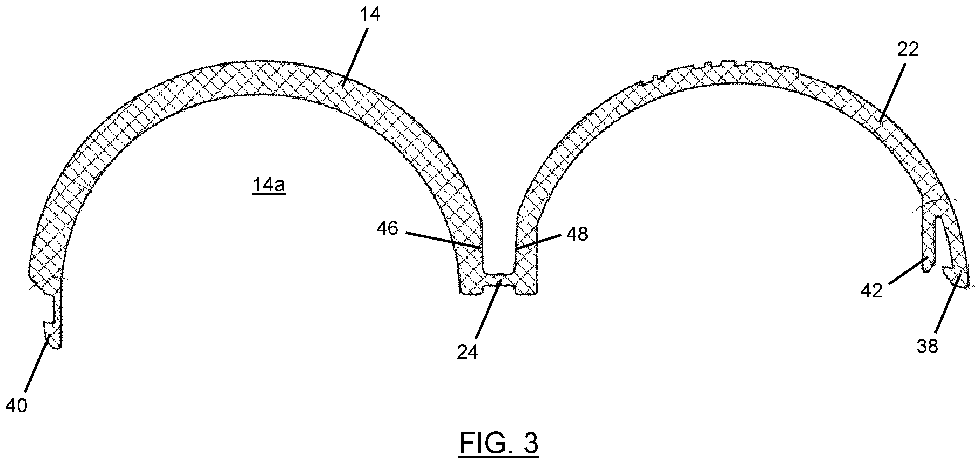

Damit das Rastelement 20, welches in den Grundkörper 14 vor einem Einführen des Wellrohrs 12 eingeschwenkt worden ist, diese Montageposition nicht in einer unerwünschten Weise wieder verlässt, ist hier an demjenigen freien Ende des Basiselements 22 der Rasteinheit 16, welches der Verbindung 24 mit dem Grundkörper 14 entgegengesetzt ist, eine Rasteinrichtung 38 vorgesehen, welche in dem im Figur 3 dargestellten Ausführungsbeispiel als ein nach radial innen weisender hakenartiger Vorsprung ausgebildet ist. An dem Grundkörper 14 ist eine entsprechende Gegenrasteinrichtung 40 vorgesehen, welche dazu eingerichtet ist, mit der Rasteinrichtung 38 in einen zerstörungsfrei lösbaren Rasteingriff zu treten, wobei die Gegenrasteinrichtung 40 hier als ein nach radial außen weisender hakenartiger Vorsprung ausgebildet ist. Im geschlossenen Zustand der Rasteinheit 16 greifen somit die Rasteinrichtung 38 der Rasteinheit 16 und die Gegenrasteinrichtung 40 des Grundkörpers 14 miteinander ein.

Um ein ungewünschtes Lösen des Rasteingriffs zwischen der Rasteinrichtung 38 und der Gegenrasteinrichtung 40 zu verhindern, beispielsweise aufgrund eines nach radial innen gerichteten Drucks auf das Basiselement 22, ist radial innerhalb von der Rasteinrichtung 38 der Rasteinheit 16 ein Vorsprung 42 angeordnet, welcher, im geschlossenen Zustand der Rasteinheit 16 beziehungsweise im Rasteingriff der Rasteinrichtung 38 mit der Gegenrasteinrichtung 40, die Gegenrasteinrichtung 40 an einer radial inneren Seite in Bezug auf den zentralen Durchgang 14a überlagert.

In Figur 3 ist ferner zu erkennen, dass das Basiselement 22 und der Grundkörper 14 in einem dem Filmscharnier 24 benachbarten Bereich zueinander weisende Flächen 46 und 48 aufweisen. Diese beiden Flächen 46 und 48 können einerseits ermöglichen, dass die Verbindung 24 des Basiselements 22 mit dem Grundkörper 14 eine im Wesentlichen einheitliche Stärke aufweist, und zum anderen können somit Formkerne eines Spritzgusswerkzeugs, welches zur Ausbildung der erfindungsgemäßen Verbindungsanordnung 10 Anwendung finden kann, in einer vorbestimmten Weise von der fertig hergestellten Verbindungsanordnung 10 entfernt werden können.

## Patentansprüche

1. Verbindungsanordnung (10), die zur Verbindung mit einem Ende (12a) eines Wellrohrs (12) ausgebildet und bestimmt ist, die Verbindungsanordnung (10) umfassend:
• einen Grundkörper (14) mit einem zentralen Durchgang (14a), der in eine an einem Ende des Grundkörpers (14) vorgesehene Aufnahmevertiefung (14b) mündet, wobei die Aufnahmevertiefung (14b) zur Aufnahme des längs einer Einführrichtung (E) einführbaren Wellrohrs (12) ausgebildet ist, und
• eine durch eine Umfangsöffnung (14c) des Grundkörpers (14) in die Aufnahmevertiefung (14b) einbringbare Rasteinheit (16) mit einem Rastelementträger (18) und einer Mehrzahl von mit dem Rastelementträger (18) einstückig ausgebildeten Rastelementen (20), wobei die Rastelemente (20) dazu ausgebildet und bestimmt sind, in ein Wellental (12b) des Wellrohrs (12) einzugreifen und sich einer Bewegung des Wellrohrs (12) entgegen der Einführrichtung (E) aus der Aufnahme heraus zu widersetzen,
wobei der Rastelementträger (18) als Schlitzring ausgebildet ist, und die Rastelemente (20) längs des Umfangs des Rastelementträgers (18) gleichmäßig verteilt angeordnet sind, wobei die Rasteinheit (16) ein Basiselement (22) umfasst, das mit dem Rastelementträger (18) einstückig verbunden ist, wobei das Basiselement (22) wenigstens eine in Einführrichtung (E) gerichtete Anlagefläche (26) oder/und wenigstens eine entgegen der Einführrichtung (E) gerichtete Anlagefläche (28) aufweist, welche jeweils mit einer zugeordneten Gegenanlagefläche (30 bzw. 32) des Grundkörpers (14) in Kraftübertragungseingriff bringbar ist/sind, und wobei der Rastelementträger (18) auf der den Rastelementen (20) abgewandten Seite eine Kontaktfläche (34) aufweist, welche mit einer zugeordneten Gegenkontaktfläche (36) des Grundkörpers (14) in kraftübertragenden Kontakt bringbar ist,
**dadurch gekennzeichnet, dass** die Rasteinheit (16) mit dem Grundkörper (14) einstückig verbunden ist,
wobei sich der Schlitz des Rastelementträgers (18) in unmittelbarer Nähe zu der Verbindung (24) der Rasteinheit (16) mit dem Grundkörper (14) befindet.

2. Verbindungsanordnung (10) nach Anspruch 1,
**dadurch gekennzeichnet, dass** das Basiselement (22) C-förmig ausgeführt ist.

3. Verbindungsanordnung (10) nach einem der vorhergehenden Ansprüche,
**dadurch gekennzeichnet, dass** die Verbindung der Rasteinheit (16) mit dem Grundkörper (14) ein Filmscharnier (24) bildet.

4. Verbindungsanordnung (10) nach einem der vorhergehenden Ansprüche,
**dadurch gekennzeichnet, dass** vermittels der Verbindung (24) die Rasteinheit (16) durch die Umfangsöffnung (14c) des Grundkörpers (14) in die Aufnahmevertiefung (14b) einschwenkbar ist.

5. Verbindungsanordnung (10) nach einem der vorhergehenden Ansprüche,
**dadurch gekennzeichnet, dass** die Rasteinheit (16), insbesondere das Basiselement (22), eine Rasteinrichtung (38) umfasst, welche dazu eingerichtet ist, mit einer entsprechenden Gegenrasteinrichtung (40) des Grundkörpers (14) in einen zerstörungsfrei lösbaren Rasteingriff zu treten.

6. Verbindungsanordnung (10) nach Anspruch 5,
**dadurch gekennzeichnet, dass** die Rasteinrichtung (38) der Rasteinheit (16) an einem freien Ende des Basiselements (22) angeordnet ist, welches der Verbindung (24) der Rasteinheit (16) mit dem Grundkörper (14), insbesondere diametral, entgegengesetzt ist.

7. Verbindungsanordnung (10) nach Anspruch 5 oder 6,
**dadurch gekennzeichnet, dass** die Gegenrasteinrichtung (40) des Grundkörpers (14) an einer Außenseite des Grundkörpers (14) angeordnet ist.

8. Verbindungsanordnung (10) nach einem der Ansprüche 5 bis 7,
**dadurch gekennzeichnet, dass** der Rasteinrichtung (38) der Rasteinheit (16) ein Vorsprung (42) zugeordnet ist, welcher dazu eingerichtet ist, im geschlossenen Zustand der Rasteinrichtung (38) einen Abschnitt der Gegenrasteinrichtung (40) des Grundkörpers (14) zu überlagern, und welcher insbesondere radial innerhalb der Rasteinrichtung (38) der Rasteinheit (16) angeordnet ist und somit den Abschnitt der Gegenrasteinrichtung (40) des Grundkörpers (14) an einer radial inneren Seite überlagert.

9. Verbindungsanordnung (10) nach einem der vorhergehenden Ansprüche,
**dadurch gekennzeichnet, dass** die Kontaktfläche (38) des Rastelementträgers (18) im Wesentlichen bündig in die wenigstens eine entgegen der Einführrichtung (E) gerichtete Anlagefläche (28) des Basiselements (22) übergeht.

10. Verbindungsanordnung (10) nach einem der vorhergehenden Ansprüche,
**dadurch gekennzeichnet, dass** die Gegenkontaktfläche (36) des Grundkörpers (14) als eine Seitenwand (36) einer Nut (44) ausgebildet ist, welche sich entlang der Innenwandung der Aufnahmevertiefung (14b) des Grundkörpers (14) in Umfangsrichtung der Aufnahmevertiefung (14b) des Grundkörpers (14) erstreckt.

11. Verbindungsanordnung (10) nach einem der vorhergehenden Ansprüche,
**dadurch gekennzeichnet, dass** in unmittelbarer Nähe zu der Verbindung (24) der Rasteinheit (16) mit dem Grundkörper (14) an der Außenseite der Rasteinheit (16) und an der Außenseite des Grundkörpers (14) jeweils eine Fläche (46, 48) angeordnet ist, wobei die beiden Flächen (46, 48) zueinander weisen und sich im Wesentlichen parallel zueinander erstrecken oder einen vorbestimmten Winkel zueinander aufweisen, welcher insbesondere bei Spitzgussbauteilen typisch ist.

## Claims

1. Connecting arrangement (10) that is designed and intended for connection to one end (12a) of a corrugated pipe (12), comprising:
• a base body (14) with a central passage (14a) that opens out into a receiving recess (14b) provided at one end of the base body (14), wherein the receiving recess (14b) is designed to receive the corrugated pipe (12) that can be inserted along an insertion direction (E), and
• a locking unit (16) that can be inserted into the receiving recess (14b) through a circumferential opening (14c) of the base body (14), having a locking element carrier (18) and a plurality of locking elements (20) formed integrally with the locking element carrier (18), wherein the locking elements (20) are designed and intended to engage in a corrugated trough (12b) of the corrugated pipe (12) and prevent the corrugated pipe (12) moving, against the insertion direction (E), from the receptacle,
wherein the locking element carrier (18) is designed as a slotted ring, and the locking elements (20) are arranged uniformly distributed along the circumference of the locking element carrier (18), wherein the locking unit (16) comprises a base element (22) that is integrally connected to the locking element carrier (18), wherein the base element (22) has at least one bearing surface (26) aligned in the insertion direction (E) and/or at least one bearing surface (28) aligned counter to the insertion direction (E), which can each be brought into force-transmitting engagement with an associated counter-bearing surface (30 or 32) of the base body (14), and wherein the locking element carrier (18) has, on the side facing away from the locking elements (20), a contact surface (34) which can be brought into force-transmitting contact with an associated counter-contact surface (36) of the base body (14),
**characterized in that** the locking unit (16) is integrally connected to the base body (14), wherein the slot of the locking element carrier (18) is located in the immediate vicinity of the connection (24) of the locking unit (16) with the base body (14).

2. Connecting arrangement (10) according to claim 1,
**characterized in that** the base element (22) is C-shaped.

3. Connecting arrangement (10) according to one of the preceding claims,
**characterized in that** the connection of the locking unit (16) to the base body (14) forms a film hinge (24).

4. Connecting arrangement (10) according to one of the preceding claims,
**characterized in that,** by means of the connection (24), the locking unit (16) can be swivelled through the circumferential opening (14c) of the base body (14) into the receiving recess (14b).

5. Connecting arrangement (10) according to one of the preceding claims,
**characterized in that** the locking unit (16), in particular the base element (22), comprises a locking device (38) which is designed to engage with a corresponding counter-locking device (40) of the base body (14) in a non-destructively releasable locking engagement.

6. Connecting arrangement (10) according to claim 5,
**characterized in that** the locking device (38) of the locking unit (16) is arranged at a free end of the base element (22) which lies opposite, in particular diametrically opposite, the connection (24) of the locking unit (16) to the base body (14).

7. Connecting arrangement (10) according to claim 5 or 6,
**characterized in that** the counter-locking device (40) of the base body (14) is arranged on an outer side of the base body (14).

8. Connecting arrangement (10) according to one of claims 5 to 7,
**characterized in that** the locking device (38) of the locking unit (16) is assigned a protuberance (42), which is configured to overlie a portion of the counter-locking device (40) of the base body (14) when the locking device (38) is in the closed state, and which is arranged in particular radially within the locking device (38) of the locking unit (16) and thus overlies the portion of the counter-locking device (40) of the base body (14) on a radially inner side.

9. Connecting arrangement (10) according to one of the preceding claims,
**characterized in that** the contact surface (38) of the locking element carrier (18) merges in a substantially flush manner into the at least one bearing surface (28) of the base element (22) aligned counter to the insertion direction (E).

10. Connecting arrangement (10) according to one of the preceding claims,
**characterized in that** the counter-contact surface (36) of the base body (14) is formed as a side wall (36) of a groove (44) which extends along the inner wall of the receiving recess (14b) of the base body (14) in the circumferential direction of the receiving recess (14b) of the base body (14).

11. Connecting arrangement (10) according to one of the preceding claims,
**characterized in that** a surface (46, 48) is in each case arranged in the immediate vicinity of the connection (24) of the locking unit (16) to the base body (14) on the outside of the locking unit (16) and on the outside of the base body (14), wherein the two surfaces (46, 48) face each other and extend substantially parallel to each other or are at a predetermined angle to each other that is typical in particular for injection-moulded components.

## Revendications

1. Ensemble de liaison (10) conçu et agencé pour être relié à une extrémité (12a) d'un tube ondulé (12), l'ensemble de liaison (10) comprenant :
• un corps de base (14) ayant un passage central (14a) qui débouche dans une cavité de logement (14b) prévue à une extrémité du corps de base (14), la cavité de logement (14b) étant conçue pour loger le tube ondulé (12) susceptible d'être introduit le long d'une direction d'introduction (E), et
• une unité d'encliquetage (16) susceptible d'être insérée dans la cavité de logement (14b) à travers une ouverture périphérique (14c) du corps de base (14) et comprenant un support d'éléments d'encliquetage (18) et une pluralité d'éléments d'encliquetage (20) formés d'un seul tenant avec le support d'éléments d'encliquetage (18), les éléments d'encliquetage (20) étant conçus et agencés pour s'engager dans un creux d'ondulation (12b) du tube ondulé (12) et à s'opposer à un mouvement du tube ondulé (12) hors du logement en sens opposé à la direction d'introduction (E),
le support d'éléments d'encliquetage (18) étant conçu comme une bague fendue, et les éléments d'encliquetage (20) étant répartis de manière régulière le long du pourtour du support d'éléments d'encliquetage (18), l'unité d'encliquetage (16) comprenant un élément de base (22) qui est relié d'un seul tenant au support d'éléments d'encliquetage (18), l'élément de base (22) présentant au moins une surface d'appui (26) orientée dans la direction d'introduction (E) et/ou au moins une surface d'appui (28) orientée en sens opposé à la direction d'introduction (E), qui peut/peuvent être mise(s) en prise de transmission de force avec une surface d'appui respective antagoniste associée (30 ou 32) du corps de base (14), et le support d'éléments d'encliquetage (18) présentant, sur le côté détourné des éléments d'encliquetage (20), une surface de contact (34) qui peut être mise en contact de transmission de force avec une surface de contact antagoniste associée (36) du corps de base (14),
**caractérisé en ce que** l'unité d'encliquetage (16) est reliée d'un seul tenant au corps de base (14),
la fente du support d'éléments d'encliquetage (18) se trouvant à proximité immédiate de la liaison (24) de l'unité d'encliquetage (16) avec le corps de base (14).

2. Ensemble de liaison (10) selon la revendication 1,
**caractérisé en ce que** l'élément de base (22) est réalisé en forme de C.

3. Ensemble de liaison (10) selon l'une des revendications précédentes,
**caractérisé en ce que** la liaison de l'unité d'encliquetage (16) avec le corps de base (14) constitue une charnière à film (24).

4. Ensemble de liaison (10) selon l'une des revendications précédentes,
**caractérisé en ce que**, grâce à la liaison (24), l'unité d'encliquetage (16) peut pivoter jusque dans la cavité de logement (14b) à travers l'ouverture périphérique (14c) du corps de base (14).

5. Ensemble de liaison (10) selon l'une des revendications précédentes,
**caractérisé en ce que** l'unité d'encliquetage (16), en particulier l'élément de base (22), comprend un dispositif d'encliquetage (38) qui est conçu pour venir en prise d'encliquetage, amovible sans destruction, avec un dispositif d'encliquetage antagoniste correspondant (40) du corps de base (14).

6. Ensemble de liaison (10) selon la revendication 5,
**caractérisé en ce que** le dispositif d'encliquetage (38) de l'unité d'encliquetage (16) est disposé à une extrémité libre de l'élément de base (22) qui est opposée, en particulier diamétralement, à la liaison (24) de l'unité d'encliquetage (16) avec le corps de base (14).

7. Ensemble de liaison (10) selon la revendication 5 ou 6,
**caractérisé en ce que** le dispositif d'encliquetage antagoniste (40) du corps de base (14) est disposé sur une face extérieure du corps de base (14).

8. Ensemble de liaison (10) selon l'une des revendications 5 à 7,
**caractérisé en ce qu'**une saillie (42) est associée au dispositif d'encliquetage (38) de l'unité d'encliquetage (16), laquelle saillie est conçue pour recouvrir, à l'état fermé du dispositif d'encliquetage (38), une partie du dispositif d'encliquetage antagoniste (40) du corps de base (14), et qui est en particulier disposée radialement à l'intérieur du dispositif d'encliquetage (38) de l'unité d'encliquetage (16) et qui recouvre ainsi la partie du dispositif d'encliquetage antagoniste (40) du corps de base (14) sur une face radialement intérieure.

9. Ensemble de liaison (10) selon l'une des revendications précédentes,
**caractérisé en ce que** la surface de contact (38) du support d'éléments d'encliquetage (18) se prolonge de manière sensiblement affleurante dans ladite au moins une surface d'appui (28) de l'élément de base (22) orientée en sens opposé à la direction d'introduction (E).

10. Ensemble de liaison (10) selon l'une des revendications précédentes,
**caractérisé en ce que** la surface de contact antagoniste (36) du corps de base (14) est conçue comme une paroi latérale (36) d'une rainure (44) qui s'étend le long de la paroi intérieure de la cavité de logement (14b) du corps de base (14) dans la direction périphérique de la cavité de logement (14b) du corps de base (14).

11. Ensemble de liaison (10) selon l'une des revendications précédentes,
**caractérisé en ce qu'**à proximité immédiate de la liaison (24) de l'unité d'encliquetage (16) avec le corps de base (14), une surface respective (46, 48) est disposée sur la face extérieure de l'unité d'encliquetage (16) et sur la face extérieure du corps de base (14), les deux surfaces (46, 48) étant tournées l'une vers l'autre et s'étendant sensiblement parallèlement l'une à l'autre ou présentant un angle prédéterminé l'une par rapport à l'autre, lequel est typique en particulier pour les pièces moulées par injection.
